# EUROPÄISCHE PATENTSCHRIFT

(11) **EP 2 521 661 B1**
(45) Veröffentlichungstag und Bekanntmachung des Hinweises auf die Patenterteilung: **08.01.2014**
(21) Anmeldenummer: 10807588.8
(22) Anmeldetag: 21.12.2010
(51) Int. Cl.: B60K 15/035

(54) **TROPFENABSCHEIDER**
DROP SEPARATOR
SÉPARATEUR DE GOUTTES

(30) Priorität: 07.01.2010 DE 102010004180
(43) Veröffentlichungstag der Anmeldung: 14.11.2012
(73) Patentinhaber: Kautex Textron GmbH & Co. KG, 53229 Bonn (DE)
(72) Erfinder: NICKEL, Waldemar, 59558 Lipstatt (DE); PRUESER, Manfred, 53359 Rheinbach (DE)
(74) Vertreter: polypatent BGL
(86) Internationale Anmeldenummer: PCT/EP2010/007820
(87) Internationale Veröffentlichungsnummer: WO 2011/082808

(56) Entgegenhaltungen:
- DE-A1-102006 004 630
- DE-U1-202008 001 586

## Beschreibung

Die Erfindung betrifft einen Tropfenabscheider für die Entlüftungsleitung eines Kraftstoffbehälters.

Ein solcher Tropfenabscheider ist beispielsweise aus der DE 20 2008 001 586 U1 bekannt. Dieses Gebrauchsmuster betrifft einen Flüssigkeits-Dampfabscheider für ein Kraftstoffsystem für ein Kraftfahrzeug, wobei der Flüssigkeits-Dampfabscheider ein Gehäuse mit einem Einlass, welches mit einem Belüftungssystem des Kraftstofftanks verbunden wird und mit einem Dampfauslass, welcher mit einem Kraftstoff-Dampffilter verbunden ist, umfasst. Das Gehäuse umfasst ferner einen Kondensationsraum für die Kondensation von Kraftstofftröpfchen, wobei dieser Kondensationsraum an den Einfüllstützen des Kraftstoffbehälters angeschlossen ist bzw. mit diesem kommuniziert.

Der bei der Entlüftung des Kraftstoffbehälters anfallende Gasvolumenstrom wird üblicherweise über ein Aktivkohlefilter als Kraftstoff-Dampffilter geführt. Um die Funktionsfähigkeit des Kraftstoff-Dampffilters bzw. Aktivkohlefilters zu gewährleisten, ist es erforderlich, Kohlenwasserstoffe in der flüssigen Phase bzw. in Tröpfchenform aus dem Kraftstoffgasvolumen auszuhalten. Diese vom Kraftstoffgasvolumenstrom mitgeführten Tröpfchen werden auch als sogenanntes "Liquid Carry-Over" bezeichnet. Gelangen flüssige Kohlenwasserstoffe in das Aktivkohlefilter, hat dies eine Blockage des Adsorptionsporenvolumens und damit eine Reduzierung der Adsorptionskapazität des Kraftstoff-Dampffilters zur Folge.

Es ist deshalb bekannt, in einer Entlüftungsleitung des Kraftstoffbehälters einen Tropfenabscheider vorzusehen, der mit dem Einfüllrohr kommuniziert, sodass das abgeschiedene "Liquid Carry-Over" bzw. die anfallende Flüssigkeit in den Kraftstoffbehälter zurückgeführt werden kann. Dies wird beispielsweise bei dem Tropfenabscheider gemäß DE 20 2008 001 586 U1 dadurch bewirkt, dass das Tropfenabscheidergehäuse im Bereich des Einfüllkopfs des Einfüllrohrs an dieses angeschlossen ist und der Kondensationsraum des Tropfenabscheiders mit dem von dem Einfüllstutzen umgebenden Betankungskanal kommuniziert.

Der Anschluss der Entlüftungsleitung erfolgt zweckmäßigerweise möglichst nahe am Einfüllende des Einfüllrohrs im Bereich des sogenannten Einfüllkopfs. In diesem Bereich des Einfüllrohrs ist dieses mit einem Einsatz versehen, der die Führung des Zapfventils, einen Fehlbetankungsschutz und die Erdung des Einfüllrohrs sicherstellt. Als Fehlbetankungsschutz ist dort u. a. üblicherweise die sogenannte Bleifreiklappe vorgesehen. Die aus der Entlüftungsleitung in das Einfüllrohr eingeleiteten in der Regel heißen Gase treffen bei Betankung auf die geöffnete Bleifreiklappe und werden stark verwirbelt. Dabei kommen die heißen Gase mit dem kalten Kraftstoffstrahl in Kontakt. Durch die Mischung heißer und kalter Gase in Verbindung mit einer heißen Vorfüllung im Tanksystem und Zuführung des kalten Kraftstoffs wird eine Gasexpansion in Verbindung mit einem hohen Kondensatanfall bewirkt. Dies kann zu Fehlabschaltungen des Zapfventils führen.

Ein Tropfenabscheider gemäß Oberbegriff von Anspruch 1 ist beispielsweise aus dem Dokument DE 10 2006 004 630 A1 bekannt, wobei bei der Gestaltung gemäß DE 10 2006 004 630 A1 das Einfüllrohr selbst nicht Teil des Entlüftungsweges ist und der Tropfenabscheider ein verhältnismäßig aufwendiges Umschaltventil umfasst, das eine Umschaltung von Betriebsentlüftung zu Betankungsentlüftung mittels des Zapfventils ermöglicht.

Eine weitere Gestaltung eines Tropfenabscheiders bzw. Flüssigkeits-Dampfabscheiders ist aus der DE 20 2008 001 586 U1 bekannt.

Der Erfindung liegt die Aufgabe zugrunde, einen Tropfenabscheider bereitzustellen, der einerseits eine besonders strömungsgünstige Einleitung des Entlüftungsgasvolumenstroms in das Einfüllrohr gewährleistet und der andererseits verhältnismäßig einfach herzustellen ist. Darüber hinaus soll der Tropfenabscheider nach der Erfindung besonders einfach im Aufbau sein.

Die der Erfindung zugrunde liegende Aufgabe wird gelöst durch einen Tropfenabscheider mit den Merkmalen des Anspruchs 1. Vorteilhafte Ausgestaltungen der Erfindung ergeben sich aus den Unteransprüchen..

Die Erfindung kann dahingehend zusammengefasst werden, dass bei einem Tropfenabscheider, der in der Entlüftungsleitung eines Entlüftungssystems eines Kraftstoffbehälters vorgesehen ist, welcher außen so an dem Betankungskanal des Einfüllrohrs angeschlossen ist, dass das Einfüllrohr selbst einen Teil des Entlüftungsweges bildet, der in das Einfüllrohr mündende Teil des Gaseintrittskanals, d. h. des Entlüftungswegs vom Kraftstoffbehälter in das Einfüllrohr, stirnseitig verschlossen ist, so dass bei der Betankung des Kraftstoffbehälters der in das Einfüllrohr eintretende Entlüftungsvolumenstrom nicht unmittelbar auf den in das Einfüllrohr eingeleiteten Kraftstoffstrahl aus dem Zapfventil auftrifft. Dieser Entlüftungsvolumenstrom wird vielmehr so umgelenkt, dass eine starke Kondensatbildung im Mündungsbereich des Zapfventils verhindert wird.

Es hat sich herausgestellt, dass überraschenderweise bereits eine solche verhältnismäßig einfache Maßnahme einen erhöhten Kondensatanfall in dem Bereich des Einfüllrohrs, in dem das Zapfventil eingeführt wird, bei der Betankung verhindert werden kann. Hierdurch können wirkungsvoll etwaige Fehlabschaltungen des Zapfventils vermieden werden. Bekanntermaßen sind Zapfventile mit eine Schnüffelbohrung versehen, die mit Unterdruck beaufschlagt ist und bei einem Druckanstieg, etwa weil flüssiger Kraftstoff in die Schnüffelbohrung gelangt, unmittelbar zur Abschaltung des Zapfventils führt.

Bei einer besonders vorteilhaften Variante des Tropfenabscheiders gemäß der Erfindung ist der Deckel als Teil der Trennwand ausgebildet. Hierdurch ist es insbesondere möglich, den Tropfenabscheider gemäß der Erfindung besonders einfach mit verhältnismäßig einfachen Spritzgusswerkzeugen herzustellen. Der Deckel kann beispielsweise über ein Filmscharnier an die Trennwand angelenkt sein, so dass diese vor Montage des Tropfenabscheiders im Einfüllrohr durch Umbiegen in seine den Gaseintrittskanal stirnseitig verschließende Stellung verbracht werden kann. Ein solches Design hat insbesondere den Vorzug, dass der Tropfenabscheider gemäß der Erfindung insgesamt einteilig im Spritzgussverfahren mit verhältnismäßig einfachen Werkzeugen herstellbar ist.

Zweckmäßigerweise ist der Deckel rastend in der den Gaseintrittskanal verschließenden Stellung festgelegt. Hierzu kann dieser beispielsweise an seinem Umfang mit einem oder mehreren Rastvorsprüngen und/oder Rastöffnungen versehen sein, die mit entsprechenden Rastvorsprüngen und/oder Rastöffnungen der Umfassungswand des Tropfenabscheidergehäuses bzw. eines an dem Tropfenabscheidergehäuse vorgesehenen Stutzens zusammenwirken können.

Bei einer bevorzugten Variante des Tropfenabscheiders gemäß der Erfindung ist vorgesehen, dass das Tropfenabscheidergehäuse einen Schweißflansch zur Verbindung mit dem Einfüllrohr des Kraftstoffbehälters aufweist.

Vorzugsweise umfasst das Tropfenabscheidergehäuse wenigstens einen Mündungsstutzen, dessen Umfassungswand teilweise den Gaseintrittskanal und den Gasaustrittskanal umschließt. Dieser Mündungsstutzen kann eine entsprechende Öffnung am Einfüllrohr bzw. in der Außenwandung eines Einfüllrohrs oder eines dem Einfüllrohr vorgelagerten Sammelraums durchsetzen.

Zweckmäßigerweise steht der Mündungsstutzen über die durch den Schweißflansch definierte Montageebene des Tropfenabscheidergehäuses hervor, so dass der Mündungsstutzen in der Einbaulage des Tropfenabscheiders in das Einfüllrohr des Kraftstoffbehälters eintaucht.

Die Erfindung betrifft weiterhin einen Kraftstoffbehälter für ein Kfz mit wenigstens einem Einfüllrohr mit wenigstens einem Entlüftungssystem, mit wenigstens einer Entlüftungsleitung zu einem Kraftstoff-Dampffilter, wobei das Entlüftungssystem wenigstens einen Tropfenabscheider umfasst und wobei der Tropfenabscheider unmittelbar an den Betankungskanal des Einfüllrohrs angeschlossen ist.

Zweckmäßigerweise ist der Tropfenabscheider bzw. das Tropfenabscheidergehäuse über einen Anschweißflansch dichtend mit einer Außenwand des Einfüllrohrs verschweißt und durchsetzt mit einem als Mündungsstutzen ausgebildeten Rohrstutzen einen Durchbruch in der Außenwand des Einfüllrohres oder einen Durchbruch in der Außenwand eines an das Einfüllrohr angeschlossenen Gassammelraums.

Die Erfindung wird nachstehend anhand eines in den Zeichnungen dargestellten Ausführungsbeispiels erläutert:

Es zeigen:
- Figur 1: eine Außenansicht des Einfüllrohrs eines Kraftstoffbehälters gemäß der Erfindung,
- Figur 2: einen Schnitt entlang der Linien II-II in Figur 1,
- Figur 3: einen Schnitt durch einen Tropfenabscheider gemäß der Erfindung in nicht montierter Lage, und
- Figur 4: einen Schnitt entlang der Linien IV-IV in Figur 3.

Der Tropfenabscheider 1 gemäß der Erfindung umfasst ein Tropfenabscheidergehäuse 2 mit zwei Entlüftungsleitungsanschlüssen 3, die im dargestellten Ausführungsbeispiel als Nippel mit Tannenbaumprofil ausgebildet sind. Das Tropfenabscheidergehäuse 2 umfasst im Wesentlichen einen zylindrischen Rohrstutzen 4 mit einem umlaufenden Schweißkragen 5 zur Verschweißung mit dem Einfüllrohr 8 eines Kunststoff-Kraftstoffbehälters. Der Kraftstoffbehälter, von welchem der Einfachheit halber nur das Einfüllrohr 8 dargestellt ist, besteht in bekannter Art und Weise aus einem mehrschichtigen thermoplastischen Kunststoff auf der Basis von HDPE mit wenigstens einer Barriereschicht für Kohlenwasserstoffe.

Der Tropfenabscheider 1 gemäß der Erfindung ist ebenfalls aus thermoplastischem Kunststoff, vorzugsweise aus einem im Sinne einer Verschweißbarkeit mit dem Einfüllrohr 8 kompatiblen Kunststoff ausgebildet. Dieser kann beispielsweise als spritzgegossenes Bauteil ausgebildet sein.

Die an dem Tropfenabscheidergehäuse 2 vorgesehenen Entlüftungsleitungsanschlüsse 3 sind in Einbaulage des Tropfenabscheiders 1 jeweils an die nicht dargestellte Entlüftungsleitung eines Entlüftungssystems eines Kraftstoffbehälters angeschlossen. Beispielsweise können behälterseitig sowohl Betankungs- als auch Betriebsentlüftungsventile vorgesehen sein, die über eine Sammelentlüftungsleitung an dem Tropfenabscheider 1 angeschlossen sind.

Der Tropfenabscheider 1 gemäß der Erfindung definiert einen ersten Gaspfad 7a von der zuvor erwähnten Sammelentlüftungsleitung in das Einfüllrohr 8 sowie einen zweiten Gaspfad 7b von dem Einfüllrohr 8 zu einem nicht dargestellten Kraftstoff-Dampffilter.

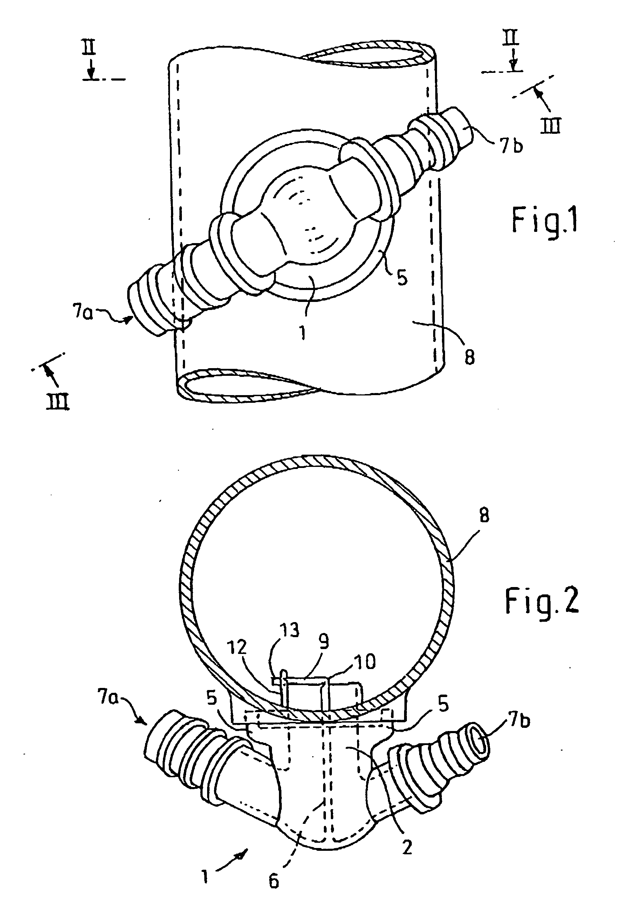

Wie dies insbesondere aus Figur 2 ersichtlich ist, ist das Tropfenabscheidergehäuse 2 so an das Einfüllrohr 8 des Kraftstoffbehälters angeschlossen, dass der an diesem vorgesehene zylindrische Rohrstutzen 4 einen Durchbruch des Einfüllrohrs 8 durchsetzt und in das Einfüllrohr 8 eintaucht. Im Bereich des umlaufenden Schweißkragens 5 ist das Tropfenabscheidergehäuse 2 dichtend mit dem Einfüllrohr 8 verschweißt. Die Trennung des ersten und des zweiten Gaspfades innerhalb des Tropfenabscheidergehäuses 2 erfolgt über eine sich in dem Tropfenabscheidergehäuse 2 erstreckende Trennwand 6. Der erste Gaspfad 7a bildet einen Gaseintrittskanal, der an die Sammelentlüftungsleitung des Kraftstoffbehälters angeschlossen ist, der zweite Gaspfad 7b hingegen einen Gasaustrittskanal, welcher an das Kraftstoff-Dampffilter des Kraftstoffbehälters angeschlossen ist. Dieses Kraftstoff-Dampffilter kann beispielsweise als an für sich bekannte Aktivkohlefilter ausgebildet sein.

Der Rohrstutzen 4 des Tropfenabscheiders 1 ist in den Durchbruch des Einfüllrohrs 8, der beispielsweise als Auskreisung ausgebildet sein kann, so eingesetzt, dass der Rohrstutzen 4 in den von dem Einfüllrohr 8 umschlossenen Betankungskanal hervorsteht bzw. eintaucht.

Die Trennwand 6 ist mittels eines Deckels 9 verschlossen, der als Verlängerung der Trennwand 6 ausgebildet ist und mittels eines Filmscharniers 10 an die Trennwand angelenkt ist.

Wie dies in Figur 2 gezeigt ist, verschließt der Deckel 9 in der Einbaulage die stirnseitige Öffnung des ersten Gaspfades 7a. In einer Umfassungswand 11 des Rohrstutzens 4 ist ein Fenster 12 als Durchbruch vorgesehen, durch welches der Entlüftungsgasvolumenstrom in den von dem Einfüllrohr 8 umschlossenen Raum bzw. in den Betankungskanal gelangt. Durch den Deckel 9 wird eine wirksame Umlenkung des Gasvolumenstroms um etwa 90° bewirkt, so dass ein Auftreffen des Entlüftungsgasvolumenstroms auf eine in diesem Bereich angeordnete Verschlussklappe im Einfüllrohr 8 verhindert wird.

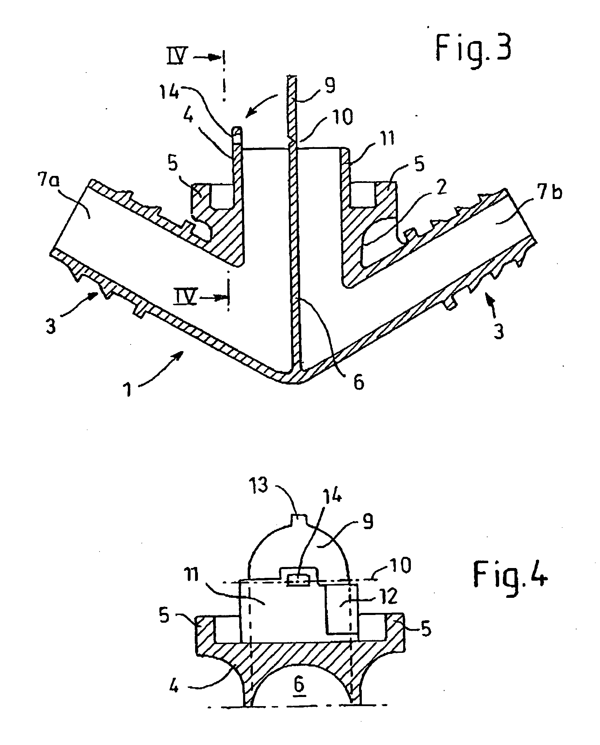

Die Figuren 3 und 4 zeigen den Tropfenabscheider 1 gemäß der Erfindung in nicht am Einfüllrohr 8 montierter Lage, wobei der Deckel 9 in der den Gaseintrittskanal 7a nicht verschließenden Stellung dargestellt ist.

Die Begriffe "Gaseintrittskanal" und "Gasaustrittskanal" im Sinne der Erfindung beziehen sich auf die Gasströmung in Bezug auf das Einfüllrohr 8. Demzufolge dient der erste Gaspfad 7a der Gaseinleitung des anfallenden Betankungs- oder Betriebsentlüftungsvolumenstroms in das Einfüllrohr 8, der zweite Gaspfad 7b dient hingegen der Herausführung des Betankungs- und/oder Betriebsentlüftungsvolumenstroms aus dem Einfüllrohr bzw. dem von dem Einfüllrohr 8 umschlossenen Betankungskanal in Richtung des KraftstoffDampffilters. Insbesondere bei der Betankung des Kfz dient das von dem Einfüllrohr 8 im Bereich des Tropfenabscheiders 1 umschlossene Volumen als Sammelraum für bei der Betankungsentlüftung mitgerissene flüssige Kohlenwasserstoffpartikel.

Jedenfalls zeigen die Figuren 3 und 4 den Tropfenabscheider 1 gemäß der Erfindung in der Nichtgebrauchslage, wie er beispielsweise aus einem Spritzgusswerkzeug entnommen wurde. Vor dessen Montage im Einfüllrohr 8 erfolgt ein Umlegen des Deckels 9 bzw. ein Einklappen des Deckels 9 in die in Figur 2 gezeigte Lage entlang der durch das Filmscharnier 10 definierten Linie. Der Deckel 9 ist hierzu mit einem Rastvorsprung 13 versehen, der in der Endlage in eine Rastausnehmung 14 der Umfassungswand 11 des Rohrstutzens 14 einschnappt bzw. eingreift.

### Bezugszeichenliste

- 1: Tropfenabscheider
- 2: Tropfenabscheidergehäuse
- 3: Entlüftungsleitungsanschlüsse
- 4: Rohrstutzen
- 5: Schweißkragen
- 6: Trennwand
- 7a, 7b: erster und zweiter Gaspfad
- 8: Einfüllrohr
- 9: Deckel
- 10: Filmscharnier
- 11: Umfassungswand
- 12: Fenster
- 13: Rastvorsprung
- 14: Rastausnehmung

## Patentansprüche

1. Tropfenabscheider (1) für die Entlüftungsleitung eines Kraftstoffbehälters, mit einem Tropfenabscheidergehäuse (2), das an einem von einem Einfüllrohr des Kraftstoffbehälters umschlossenen Raum, vorzugsweise unmittelbar an den Betankungskanal des Einfüllrohrs (8) angeschlossen ist, mit wenigstens zwei Entlüftungsleitungsanschlüssen (3), wobei das Gehäuse mittels wenigstens einer Trennwand in wenigstens zwei voneinander getrennte Gaspfade (7a, 7b) unterteilt ist, wobei ein erster Gaspfad (7a) als Gaseintrittskanal und ein zweiter Gaspfad (7b) als Gasaustrittskanal ausgebildet ist, **dadurch gekennzeichnet, dass** der Gaseintrittskanal stirnseitig mittels eines Deckels (9) verschlossen ist und über einen Durchbruch einer Umfassungswand (11) des Tropfenabscheidergehäuses (2) mit dem Einfüllrohr (8) kommuniziert, dass der Deckel (9) als Teil der Trennwand ausgebildet ist und dass der Deckel (9) als Verlängerung der Trennwand ausgebildet ist, die über ein Filmscharnier (10) an die Trennwand angelenkt ist.

2. Tropfenabscheider (1) nach Anspruch, **dadurch gekennzeichnet, dass** der Deckel (9) rastend in der den Gaseintrittskanal verschließenden Stellung festgelegt ist.

3. Tropfenabscheider (1) nach einem der Ansprüche 1 oder 2, **dadurch gekennzeichnet, dass** das Tropfenabscheidergehäuse (2) einen Schweißflansch zur Verbindung mit dem Einfüllrohr (8) des Kraftstoffbehälters aufweist.

4. Tropfenabscheider (1) nach einem der Ansprüche 1 bis3, **dadurch gekennzeichnet, dass** das Tropfenabscheidergehäuse (2) wenigstens einen Mündungsstutzen umfasst, dessen Umfassungswand (11) teilweise den Gaseintrittskanal und den Gasaustrittskanal umschließt.

5. Tropfenabscheider (1) nach Anspruch 4, **dadurch gekennzeichnet, dass** der Mündungsstutzen über die durch den Schweißflansch definierte Ebene hervorsteht, so dass der Mündungsstutzen in der Einbaulage des Tropfenabscheiders (1) in das Einfüllrohr (8) eintaucht.

6. Kraftstoffbehälter für ein Kfz mit wenigstens einem Einfüllrohr (8) mit wenigstens einem Entlüftungssystem mit wenigstens einer Entlüftungsleitung zu einem Kraftstoff-Dampffilter, wobei das Entlüftungssystem wenigstens einen Tropfenabscheider (1) mit den Merkmalen eines der vorhergehenden Ansprüche umfasst, und wobei der Tropfenabscheider (1) unmittelbar an den Betankungskanal des Einfüllrohrs (8) angeschlossen ist.

7. Kraftstoffbehälter nach Anspruch 6, **dadurch gekennzeichnet, dass** das Tropfenabscheidergehäuse (2) über einen Schweißflansch dichtend mit der Außenwand des Einfüllrohrs (8) verschweißt ist und mit einem als Mündungsstutzen ausgebildeten Rohrstutzen einen Durchbruch in der Außenwandung des Einfüllrohrs (8) durchsetzt.

## Claims

1. A droplet separator (1) for the vent line of a fuel tank, having a droplet separator housing (2) which is connected to a chamber surrounded by a filler pipe of the fuel tank, preferably directly to the refuelling channel of the filler pipe (8), having at least two vent line connections (3), wherein the housing is divided into at least two mutually separate gas paths (7a, 7b) by means of at least one dividing wall, wherein a first gas path (7a) is constructed as a gas entry channel and a second gas path (7b) is constructed as a gas discharge channel, **characterised in that** the gas entry channel is closed at the end face by means of a cover (9) and communicates with the filler pipe (8) by way of an opening in a surrounding wall (11) of the droplet separator housing (2), **in that** the cover (9) is constructed as part of the dividing wall and **in that** the cover (9) is constructed as an extension of the dividing wall, which extension is hinged to the dividing wall by way of an integral hinge (10).

2. A droplet separator (1) according to Claim 1, **characterised in that** the cover (9) is fixed in latching manner in the position closing the gas entry channel.

3. A droplet separator (1) according to one of Claims 1 or 2, **characterised in that** the droplet separator housing (2) has a weld flange for connection to the filler pipe (8) of the fuel tank.

4. A droplet separator (1) according to one of Claims 1 to 3, **characterised in that** the droplet separator housing (2) comprises at least one connecting mouth whereof the surrounding wall (11) partially surrounds the gas entry channel and the gas discharge channel.

5. A droplet separator (1) according to Claim 4, **characterised in that** the connecting mouth projects beyond the plane defined by the weld flange so that the connecting mouth dips into the filler pipe (8) in the installed position of the droplet separator (1).

6. A fuel tank for a motor vehicle having at least one filler pipe (8) with at least one vent system with at least one vent line to a fuel vapour filter, wherein the vent system comprises at least one droplet separator (1) having the features of one of the preceding claims, and wherein the droplet separator (1) is connected directly to the refuelling channel of the filler pipe (8).

7. A fuel tank according to Claim 6, **characterised in that** the droplet separator housing (2) is welded in sealing manner to the outer wall of the filler pipe (8) by way of a weld flange and passes through an opening in the outer wall of the filler pipe (8) by means of a pipe connection constructed as a connecting mouth.

## Revendications

1. Séparateur de gouttes (1) pour la conduite de ventilation d'un réservoir à carburant, comportant un carter (2) qui est raccordé à une chambre, entourée par un tube de remplissage du réservoir à carburant, de préférence directement au conduit d'alimentation du tube de remplissage (8), comportant au moins deux raccords à la conduite de ventilation (3), ledit carter étant divisé par au moins une cloison en au moins deux voies de circulation des gaz (7a, 7b) séparées l'une de l'autre, une première voie de circulation des gaz (7a) étant réalisée sous forme de conduit d'entrée des gaz et une deuxième voie de circulation des gaz (7b) étant réalisée sous forme de conduit de sortie des gaz, **caractérisé en ce que** le conduit d'entrée des gaz est fermé sur le côté frontal par un couvercle (9) et communique avec le tube de remplissage (8) par l'intermédiaire d'une percée dans une paroi périphérique (11) du carter (2), **en ce que** le couvercle (9) est réalisé sous la forme d'une partie de la cloison et **en ce que** le couvercle (9) est réalisé sous la forme d'un prolongement de la cloison, lequel est articulé sur la cloison au moyen d'une charnière flexible (10).

2. Séparateur de gouttes (1) selon la revendication 1, **caractérisé en ce que** le couvercle (9) est fixé par encliquetage dans la position obturant le conduit d'entrée des gaz.

3. Séparateur de gouttes (1) selon la revendication 1 ou 2, **caractérisé en ce que** le carter (2) comporte une bride soudée pour la liaison avec le tube de remplissage (8) du réservoir à carburant.

4. Séparateur de gouttes (1) selon l'une quelconque des revendications 1 à 3, **caractérisé en ce que** le carter (2) comporte au moins une bouche dont la paroi périphérique (11) entoure partiellement le conduit d'entrée des gaz et le conduit de sortie des gaz.

5. Séparateur de gouttes (1) selon la revendication 4, **caractérisé en ce que** la bouche s'avance en saillie au-delà du plan défini par la bride soudée, de telle sorte que, dans la position montée du séparateur de gouttes (1), la bouche plonge dans le tube de remplissage (8).

6. Réservoir à carburant pour un véhicule automobile, comportant au moins un tube de remplissage (8) avec au moins un système de ventilation comportant au moins une conduite de ventilation vers un filtre à vapeurs de carburant, ledit système de ventilation comportant au moins un séparateur de gouttes (1) avec les caractéristiques de l'une quelconque des revendications précédentes, et ledit séparateur de gouttes (1) étant raccordé directement au conduit d'alimentation du tube de remplissage (8).

7. Réservoir à carburant selon la revendication 6, **caractérisé en ce que** le carter (2) du séparateur de gouttes est soudé de manière étanche à la paroi extérieure du tube de remplissage (8) par l'intermédiaire d'une bride soudée, et, avec une tubulure réalisée sous la forme d'une bouche, passe à travers une percée dans la paroi extérieure du tube de remplissage (8).
